(19) Europäisches Patentamt
European Patent Office
Office européen des brevets

(11) **EP 1 924 098 A1**

(12) **EUROPEAN PATENT APPLICATION**

(43) Date of publication:
**21.05.2008 Bulletin 2008/21**

(51) Int Cl.:
*H04N 7/26* (2006.01)

(21) Application number: **06124068.5**

(22) Date of filing: **14.11.2006**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK RS**

(71) Applicant: **Sony Deutschland GmbH**
**10785 Berlin (DE)**

(72) Inventor: **Lei, Zhichun**
**Sony Deutschland GmbH**
**70327 Stuttgart (DE)**

(74) Representative: **Körber, Martin Hans**
**Mitscherlich & Partner**
**Patent- und Rechtsanwälte**
**Postfach 33 06 09**
**80066 München (DE)**

(54) **Motion estimation and scene change detection using two matching criteria**

(57)    This invention relates to a motion estimation and scene change detection method using two matching criteria, whereby the first matching criterion applies goodness-of-fit or another known matching criterion for motion estimation and the second matching criterion is the reciprocal value of the estimation error variance lower bound, which can be given by the Cramer-Rao-Inequation. This method also makes fully advantage of the multiresolution signal processing.

Fig. 1

$$\sum_{(x,y)\in I}\left(\frac{\partial}{\partial x}s(x,y)\right)^2$$

$$\sum_{(x,y)\in I}\left(\frac{\partial}{\partial y}s(x,y)\right)^2$$

$$\sum_{(x,y)\in I}\left(\frac{\partial}{\partial x}s(x,y)\frac{\partial}{\partial y}s(x,y)\right)$$

input

$2\sigma^2$

$\gamma_x$

$\gamma_y$

$\gamma_{xy}$

$$\frac{\gamma_y\gamma_x}{\left(\gamma_x\gamma_y-\gamma_{xy}^2\right)^2}$$

$\sigma_{xy}^2{}_{min}$

cost function calc.    (SAD)

motion estimation (block matching)

motion vectors

EP 1 924 098 A1

**Description**

**Field of invention**

This invention relates to the field of image processing, in particular to motion estimation and its matching criterion. Motion estimation and scene change detection is needed for many applications like e.g. coding, segmentation.

**Problem**

Motion estimation of motion vectors for motion blocks is dependent on the local motion vectors, said local motion vectors describing the movement of pixels within two frames or areas, said frames or areas being successive in time. Depending on a matching criterion (also called cost function, goodness-of-fit), e.g. the SAD (summed absolute difference) value, specific local motion vectors are chosen and are used for said motion estimation to obtain said motion vectors.

Also other criteria can be calculated for said motion estimation. Due to disturbing facts which comprises similar picture elements, the applied matching criterion as said SAD can fail, and the failure possibility is even relative high.

Another problem involved in this subject is the scene change detection which suffers from the same problem of the reliability of the motion estimation and its matching criterion. With the method of the present invention, it is possible to conclude whether and to what extend there is a scene change detection within two frames.

**State of the art**

Motion estimation techniques broadly fall into four classes: differential methods, phase correlation methods, block matching methods, and feature-based methods. Among them, block matching methods are probably the most widespread motion estimation technique. This is not only because the current video coding standards (like MPEG2, AVC) are block-based, but also because it is required by other motion estimation technique, e.g. the phase correlation methods. The phase correlation surface only indicates the possible motion candidates and possibly helps to reduce the motion search range. Finally, it is the block matching technique, which is also called image correlation or vector assignment in case of phase correlation motion estimation technique, which decides whether there is really motion, and where the motion vectors locate if applicable. It is well-known that the motion estimation technique has great influence on the motion estimation result.

**Objectives**

It is an object of the present invention to provide a better motion estimation whose results are more reliable. To get better results from the motion estimation, one have to think of means of how to improve the potential of said results before starting said motion estimation. Moreover the preparation of the data being reliably used by the motion estimation should involve less calculation time. Also the image scene change detection of between blocks has to be improved and should be more reliable and meaningful.

**Summary of the invention**

The present invention relates to a method for obtaining at least one global motion vector from local motion vectors, said local motion vectors describing the motion of pixels of a region within two different images, said at least one global motion vector describing the motion of said region within said two images, said image processing method comprising steps of evaluating said local motion vectors based on at least one matching criterion, wherein one matching criterion is based on a result of a statistical estimation function regarding said local motion vectors, and whereby said step of evaluating concludes the reliability of said local motion vectors for motion estimation; processing said local motion vectors, whereby said step of processing comprises steps of selecting and/or deleting said local motion vectors according to their reliability; and performing said motion estimation technique with a least number of most reliable local motion vectors obtained by said processing step, whereby said number is dependent on said motion estimation technique.

Favorably said result of the statistical estimation function is based on a result of the Cramer-Rao-Inequation.

Favorably said one matching criterion is inversely proportional to said result of the Cramer-Rao-Inequation.

Favorably said step of evaluating processes a second matching criterion which is based on a cost function calculation like gradient, energy, standard deviation or summed absolute difference.

Favorably said step of evaluating processes at least two matching criteria, said matching criteria are simultaneously applied to evaluate said local motion vectors.

Favorably said image processing method comprises steps of calculating at least one of said at least one matching criterion.

Favorably said image processing method is conducted when a previously executed comparing step states that reliable motion estimation for said region is possible.

Favorably said comparing step evaluates whether the result of the Cramer-Rao-Inequation is in a specific range, said range starting and located above a predetermined value.

Favorably said comparing step evaluates whether a inversely proportional result of the Cramer-Rao-Inequation is smaller than a result of the cost function calculation.

Favorably said comparing step is conducted when a controlling step affirms the similarity of the result of the Cramer-Rao-Inequation of said region of the current image and the result of the Cramer-Rao-Inequation of said region of the succeeding image.

Favorably said result of the Cramer-Rao-Inequation is calculated before executing the controlling step.

Favorably said image processing method comprises a multi-resolution processing step to reduce the variance of the estimation error.

Favorably said image processing method comprises an orthogonal filtering step.

Favorably said image processing method describes a scene change or the degree of scene change between two images based on the number of regions successfully allocated with said global motion vectors.

The present invention also relates to an image processing device which is operable to obtain at least one global motion vector from local motion vectors, said local motion vectors describing the motion of pixels of a region within two different images, said at least one global motion vector describing the motion of said region within said two images, said image processing device comprising an evaluation device operable to evaluate said local motion vectors based on at least one matching criterion, wherein one matching criterion is based on a result of a statistical estimation function regarding said local motion vectors, and to conclude the reliability of said local motion vectors for motion estimation; a processing device operable to process said local motion vectors, whereby said processing device comprises a selection and/or a deletion device operable to respectively select or delete said local motion vectors according to their reliability; and a motion estimation device operable to perform motion estimation with a least number of most reliable local motion vectors obtained by said processing device, whereby said number is dependent on said motion estimation.

Favorably said result of the statistical estimation function is based on a result of the Cramer-Rao-Inequation.

Favorably said one matching criterion is inversely proportional to said result of the Cramer-Rao-Inequation.

Favorably said evaluation device is operable to evaluate said local motion vectors based on a second matching criterion, said second matching criterion being based on a cost function calculation like gradient, energy, standard deviation or summed absolute difference.

Favorably said evaluation device is operable to evaluate said local motion vectors based on at least two matching criteria, said matching criteria are simultaneously applied to said local motion vectors.

Favorably said motion estimation device is operable to select affine model transformation, projective transformation or polynomial transformation for motion estimation.

Favorably said image processing device comprises a calculation device, said calculation device being operable to receive said local motion vectors, to calculate said at least one matching criterion and output said at least one matching criterion to said evaluation device.

Favorably said image processing device describes a scene change or a degree of scene change based on the number of regions successfully allocated to said global motion vectors.

**Description of the drawings**

The features, objects, and advantages of the present invention will become more apparent from the detailed description set forth below when taken in conjunction with the drawings, wherein:

Figure 1 shows a block diagram for motion estimation using two matching criteria,
Figure 2 shows a block diagram for a sequence of the motion estimation, and
Figure 3 shows a block diagram of an image processing device.

**Description of the invention**

Through out the description of the present invention the description and mentioning of motion estimation or motion estimation technique(s) is always intended to be equivalent to scene change detection, since due to the reliable estimation of global motion vectors a scene change can be directly concluded. The motion estimation can successfully estimate a large number of global motion vectors, when there is no scene change. Vice-versa due to scene change, less or no global motion vector will be estimated by the motion estimation technique. Basically a conclusion is formed after the calculation of the global motion vectors after the motion estimation. All technical features for said scene change detection will be described in the succeeding description of the motion estimation.

In order to reduce the failure possibility in case of motion estimation, saying block matching and all other motion estimations based on said block matching, besides the criterion, saying e.g. SAD (summed absolute difference), a 2nd criterion can be applied so that the matching will become more meaningful, in particular when a 2nd criterion is applied that does not belong to the same category as the 1st criterion. As 2nd criterion, e.g. the gradient, energy, standard deviation calculated from the picture area in question can be selected. The motion estimation comprises parameter/ model based motion estimation techniques like e.g. affine model/transformation. Said motion estimation comprises global motion estimation operable to obtain global motion vectors.

Besides the estimation technique adopted, the materials play a very important role in estimation result. In case of motion estimation, the materials are the image contents, namely textures, edges, lines, points. If the materials are not suitable for estimation purpose, the estimation error variance will be so high that the estimation result is not useful, and this is independent of the estimation technique. The Cramer-Rao-Inequation gives the lower bound of the estimation error variance, i.e. the best case of motion estimation. For the state-of-the-art approaches, the $\sigma_{xy}^2{}_{min}$ of the Cramér-Rao-Inequation or gradient value is only used to select regions where reliable motion estimation is possible or impossible, namely the $\sigma_{xy}^2{}_{min}$ parameter only plays a 1/0, or ON/OFF role. For horizontal (x) motion estimation, the lower bound of the estimation error variance is:

$$\sigma_{x\,min}^2 = \frac{\gamma_y}{\gamma_x \gamma_y - \gamma_{xy}^2}, \qquad (1)$$

and for vertical (y) motion estimation, the lower bound of the estimation error variance is:

$$\sigma_{y\,min}^2 = \frac{\gamma_x}{\gamma_x \gamma_y - \gamma_{xy}^2}, \qquad (2)$$

where

$$\gamma_x = \frac{1}{2\sigma^2} \sum_{(x,y)\in I} (\frac{\partial}{\partial x}s(x,y))^2, \qquad (3)$$

$$\gamma_y = \frac{1}{2\sigma^2} \sum_{(x,y)\in I} (\frac{\partial}{\partial y}s(x,y))^2, \qquad (4)$$

$$\gamma_{xy} = \frac{1}{2\sigma^2} \sum_{(x,y)\in I} \left( \frac{\partial}{\partial x}s(x,y)\frac{\partial}{\partial y}s(x,y) \right), \qquad (5)$$

with $\sigma^2$ for the image noise variance, and I for the image area in question, usually a block of size M lines by N columns. Therefore, for any motion estimation technique, the variance of horizontal estimation error, denoted by $\sigma_x^2$, will not be smaller than $\sigma_x^2{}_{min}$, i.e.

$$\sigma_x^2 \geq \frac{\gamma_y}{\gamma_x \gamma_y - \gamma_{xy}^2}. \qquad (6)$$

And for any motion estimation technique, the variance of vertical estimation error, denoted by $\sigma_y{}^2$, will not be smaller than $\sigma_y{}^2{}_{min}$, i.e.

$$\sigma_x^2 \geq \frac{\gamma_x}{\gamma_x \gamma_y - \gamma_{xy}^2} . \qquad (7)$$

Because objects do not only move in horizontal and vertical direction, $\sigma_x{}^2{}_{min}$ and $\sigma_y{}^2{}_{min}$ have to be combined together. For simplicity reason, it is possible to simply compute the product of $\sigma_x{}^2{}_{min}$ and $\sigma_y{}^2{}_{min}$, i.e.

$$\sigma_{xy\,min}^2 = \frac{\gamma_y}{\gamma_x \gamma_y - \gamma_{xy}^2} \cdot \frac{\gamma_x}{\gamma_x \gamma_y - \gamma_{xy}^2}$$
$$= \frac{\gamma_y \gamma_x}{(\gamma_x \gamma_y - \gamma_{xy}^2)^2} . \qquad (8)$$

For practical application the reciprocal value of $\sigma_{xy}{}^2{}_{min}$ is preferred, denoted as $\sigma_{xy}{}^2{}_{max}$, i.e.

$$\sigma_{xy\,max}^2 = \frac{(\gamma_x \gamma_y - \gamma_{xy}^2)^2}{\gamma_y \gamma_x} . \qquad (9)$$

The result of equation (8) or (9) explains in which region a motion vector can be estimated, and in which region reliable motion estimation is impossible. From equation (8) or (9) it becomes apparent, that reliable estimation of motion vectors in flat areas is not possible.
The motion vector shall be estimated from picture region whose estimation error variance is small enough, at best reaches the lower bound of the estimation error variance, which is given by the Cramer-Rao-Inequation. In other words, motion vectors are only estimated from regions whose goodness-of-fit (Gof) is larger than the reciprocal value of the lower bound of the estimation error variance determined by the Cramer-Rao-Inequation.

$$Gof > \frac{1}{\sigma_{xy\,min}^2} \qquad (10)$$

Because the Cramer-Rao-Inequation is capable to point out where (within a picture) reliable motion estimation is impossible, it is possible to remove these spurious local motion vectors, and they are replaced by the interpolation result of their neighboring local motion vectors.
The Cramer-Rao-Inequation specifies the potential of motion estimation reliability, independent of motion estimation technique adopted. However, it can happen that theoretically the potential of motion estimation reliability is high, i.e. the image content is suitable for motion estimation, but it is not possible to reach this potential due to the motion estimation or its pre-processing technique adopted.
As cost function, goodness-of-fit or matching criterion for motion estimation e.g. normalized cross-correlation coefficient (NCC), squared error difference, summed absolute difference (SAD) can be applied. Because of its simplicity, SAD is often adopted. As said, the widespread motion estimation method is the block matching.
Parameter/model based motion estimation, e.g. affine model/transformation based motion estimation, is widely applied to estimate e.g. rotation, zooming, shearing motion, in addition to translation motion. Affine model/transformation has six unknown variables/parameters. If the motion is beyond translation, zooming, rotation and shearing, other type of transformation can be used, e.g. the projective transformation and the polynomial transformation, which can need more unknown variables/parameters than affine transformation does.

Global motion estimation is needed for many applications, e.g. coding, segmentation. To get global motion vectors the parameter/model based motion estimation method, e.g. affine transformation is applied.

These six unknown parameters of affine transformation have to be solved using equations, which are built by the known ones, e.g. results, conditions. Usually the results of local motion estimation, e.g. block matching, are applied to build the equations.

Because affine transformation has six unknown parameters, at least six equations are required, i.e. at least three local motion vectors (x- and y-movement respectively) are needed. Motion estimation is an ill-posed problem, some local motion vectors can be totally wrong, which are often called outlier in the literature. Some local motion vectors are not totally wrong, but have a relative large tolerance. The outliers and local motion vectors with a relative large tolerance will cause wrong solution of the six unknown parameters. In order to alleviate this kind of affect, more or even much more than three motion vectors are applied for global motion estimation so that the influence of outliers and local motion vectors with a relative large tolerance on global motion estimation can be reduced.

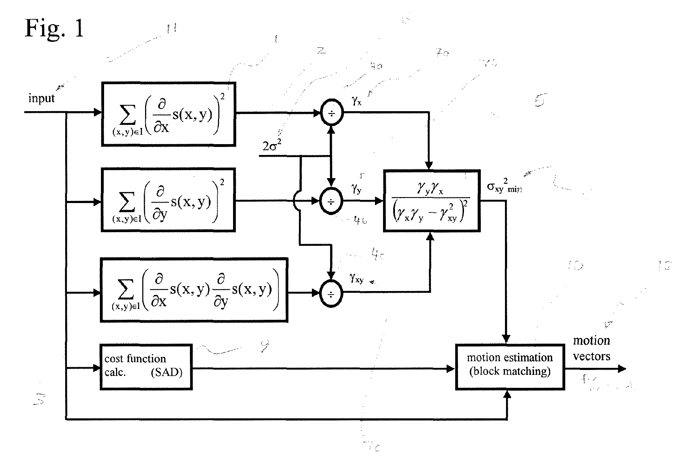

In the present invention, the Cramer-Rao-Inequation result, i.e. the result from equation (8) or (9) is applied as the 2nd matching criterion. That is, the usual matching criterion (e.g. SAD) and a 2nd criterion, preferably the result from equation (8) or (9) are combined together as matching criterion. While SAD belongs to a goodness-of-fit function summarizing the discrepancy between observed values and the values expected under a model in question, the Cramer-Rao-Inequation is based on the maximum-likelihood-method and is a point estimation function which performs a statistical analysis for a spot sample to define an estimator with a maximized likelihood. Figure 1 shows a block diagram for this image processing method comprising a motion estimation step.

When the gradient or the result of equation (8) or (9) is calculated for selecting areas that are suitable for motion estimation, the above approach does not increase the hardware complexity or computational load significantly. On the contrary, it can even reduce the computational load because it is necessary to estimate motion vector from the areas where equation (8) or (9) results are the same or similar. If the $\sigma_{xy}^2{}_{min}$ (or $\sigma_{xy}^2{}_{max}$) values at two regions of two different frames/images differ from each other significantly, it is not necessary to calculate the SAD and the following comparison operation any more. If the computational load has to be further reduced, the gradient, energy, standard deviation, preferably the $\sigma_{xy}^2{}_{min}$ (or $\sigma_{xy}^2{}_{max}$) value can be used alone as matching criterion. Therefore, the $\sigma_{xy}^2{}_{min}$ (or $\sigma_{xy}^2{}_{max}$) plays more than a 1/0, or ON/OFF role. According to the state of the art the parameter's value of the Cramér-Rao-Inequation was not fully made use of. Although the Cramer-Rao-Inequation specifies the potential of motion estimation reliability for an image sequence in question, the potential by pre-processing the image sequence in question can be improved.

Above, a case with two matching criteria has been discussed. It is possible to combine more than two criteria as matching criterion to reduce the wrong motion estimation possibility. Thus the more matching criteria are applied to the local motion vectors, the more these local motion vectors are considered as reliable for motion estimation.

The application of the Cramer-Rao-Inequation is particularly useful for the parameter/model based motion estimation, e.g. the affine model based one, because the model based motion estimation usually needs control points. The model-based motion estimation method, in particular for global motion estimation, will weight the local motion vectors using different factors, in particular by weighting the outliers and local motion vectors with a relative large tolerance using small factors, if it is calculated in advance which local motion vectors are reliable or are outliers or have relative large tolerance. The Cramer-Rao-Inequation provides an effective way to determine these weighting factors: the weighting factor is selected as inversely proportional to $\sigma_{xy}^2{}_{min}$, $\sigma_x^2{}_{min}$ or/and $\sigma_y^2{}_{min}$. Besides, as the Cramer-Rao-Inequation defines, its result leads to the error tolerance value of the motion estimation in question. Therefore, this value also statistically describes the reliability of the motion estimation result. As result, the L most reliable motion estimation result are selected for further parameter/model based motion estimation. The variable L is a number which is determined by the model in question, e.g., for the affine transformation/model the least L value is six.

Because the Cramer-Rao-Inequation needs image gradients, which are affected by noise, the $\sigma_{xy}^2{}_{min}$ (or $\sigma_{xy}^2{}_{max}$) can also be affected by noise. Although the summing operation $\Sigma$ plays role in reducing noise disturbance, the $\sigma_{xy}^2{}_{min}$ (or $\sigma_{xy}^2{}_{max}$) is still more sensitive than e.g. the SAD. The usual pre-filtering technique, e.g. the orthogonal filtering, can reduce the noise affect, but the hardware complexity or computational load will be increased.

Because the multiresolution signal processing is an efficient method to extend the motion vector search range and reduce the noise affect on motion estimation, the multiresolution processing is applied to the Cramer-Rao-Inequation. Besides the noise reduction effect, the edge gradient will become larger after decimation, the multiresolution processing can, therefore, reduce the estimation error variance (cf. the calculation of the Cramer-Rao-Inequation) and again improve the motion estimation result. The decimation operation comprises low pass filtering followed by down sampling.

Further the reliability of the global motion estimation which is based on the local motion vectors can be improved:

Global motion estimation is needed for many applications, e.g. coding, segmentation. Global motion - translation, zooming, rotation and shearing can be modelled as affine transformation, which has six unknown variables/parameters. If the motion is beyond translation, zooming, rotation and shearing, other type of transformation can be used, e.g. the projective transformation and the polynomial transformation, which can need more unknown variables/parameters than affine transformation does. For simplicity of discussion, in the following we only discuss affine transformation case.

These six unknown parameters have to be solved using equations, which are constructed by the known ones, e.g. results, conditions. Usually the motion estimation results are applied. The motion vectors of size MxN, e.g. 16x 16, can be estimated from the actual field/frame picture and its previous field/frame picture by e.g. the block matching technique. In the following, they will be referred as local motion vectors. From a field/frame picture a motion vector field/frame is obtained.

Because affine transformation has six unknown parameters, at least six equations are required, i.e. at least three local motion vectors (x- and y-movement respectively) are needed. Motion estimation is an ill-posed problem, some local motion vectors can be totally wrong, which are often called outlier in the literature. Some local motion vectors are not totally wrong, but have a relative large tolerance. The outliers and local motion vectors with a relative large tolerance will cause wrong solution of the six unknown parameters. In order to alleviate this kind of affect, more or even much more than three motion vectors are applied for global motion estimation so that the influence of outliers and local motion vectors with a relative large tolerance on global motion estimation can be reduced. A still better result can be achieved by weighting the local motion vectors using different factors, in particular by weighting the outliers and local motion vectors with a relative large tolerance using small factors, if it is known in advance which local motion vectors are reliable, which are outlier and which have relative large tolerance.

However, this kind of a-priori can be unreliable and even not available at all if the picture sequence in question is not examine. At best the picture sequence in question should be examined quantitatively. Even if such a-priori is available, the outliers and local motion vectors with a relative large tolerance will degrade the precision of the six unknown parameters solution. Therefore, the local motion vectors from the vector field/frame should be selected that are with the highest probability "correct". Concerning this matter, the Cramer-Rao-Inequation is the best solution known so far, in particular when the Cramer-Rao-Inequation result is not only considered as 1/0, or ON/OFF, but also used as the value which it is itself. Therefore the nearer the calculated value of $\sigma_{xy}^2$ is in reference to $\sigma_{xy}^2{}_{min}$, the higher a local motion vector is weighted. Thus the higher weighted local motion vectors are in favor to be used for the motion estimation calculation to create a motion vector.

For some application, e.g. mode detection (interlaced or progressive, film mode), the local motion vectors are taken advantage of. Because the local motion vectors that are "incorrect" with the highest probability are removed, the mode detection result will become more reliable.

Also the scene change detection will become more reliable, since the next frame or area which are considered as the "correct" next ones are compared with the current frame or area, respectively. It is possible to detect a scene change by the number of the matched blocks found between two neighboring pictures. In this way a scene change can be gradually detected, e.g. from small change (the number of the matched blocks is large) to complete change (the number of the matched blocks is zero).

Moreover the interaction of similar picture blocks can be reduced:

There can be many similar picture blocks in a sequence, whose SAD values are the same or similar. Thus, it can happen that blocks are found having the same or similar SAD value by motion estimation, although whose movements do not correspond to the true movement. For many kinds of application, dense motion vectors are desired, which in turn needs to reduce the block size of motion estimation. Reducing the block size, however, will increase the probability that similar blocks are found by motion estimation, although whose movements do not correspond to the true movement. Therefore, another matching criterion in addition to SAD is needed. Because the Cramer-Rao-Inequation result is calculated to decide where reliable motion estimation is possible or impossible, the Cramer-Rao-Inequation result is applied as matching criterion besides SAD. In this way, without increasing the hardware complexity or computational load significantly, the interaction of similar picture blocks can be reduced.

Now describing in detail the features of the Figure 1, one embodiment of the method 13 of the present invention comprises steps of calculating $\sigma_{xy}^2{}_{min}$ (said step is now referenced as LBC step) 1 to 8 and a cost function 9 like e.g. SAD and of providing motion estimation 10 like e.g. block matching. The whole method is provided at the input with data 11, said data 11 comprising at least local motion vectors of image pixels; additionally image pixels themselves are part of the data input 11 in another example. The local motion vectors describe the movement of the image pixels between the present image and the succeeding or preceding image. Of course this local motion vector can also be derived from a combination of other motion vectors, said motion vectors comprising vectors referring either to pixels in preceding or succeeding images. Or local motion vectors can be derived from comparing pixels of different images, describing the movements of the pixels. The motion estimation 10 outputs global motion vectors 12 as motion estimation result, whereby one or more motion vectors describe the movement of an area, region or block of pixels between two images.

The LBC step comprises the steps of calculating a sum of $\gamma_x$ - component 1, a sum of $\gamma_y$ - component 2 and a sum of $\gamma_{xy}$ - component 3; furthermore steps of dividing said sums 1 to 3 by a factor based on the image noise variance 6, respectively, whereby said steps of dividing is referenced as 4a, 4b and 4c for the $\gamma_x$ - component 1, $\gamma_y$ - component 2 and $\gamma_{xy}$ - component 3, respectively. In this example the factor is twice the value of the image noise variance 6. Finally a step of calculating $\sigma_{xy}^2{}_{min}$ 5, which outputs said value $\sigma_{xy}^2{}_{min}$ 8. In step 5 the output signals 7a, 7b and 7c of the respective dividing steps 4a, 4b and 4c are computed with each other according to the formula (8).

The $\sigma_{xy}^2{}_{min}$ value 8 is the lower-bound value of the estimation error variance of the horizontal and vertical estimation and is transferred as matching criterion to the motion estimation step 10. In step 9, a cost function calculation like e.g. SAD is performed. The output of step 9 is also transferred to the motion estimation step 10 as a second matching criterion. The data 11 is input into the steps 1, 2, 3, 9 and 10. In step 10, the local motion vectors, which are part of the input data 11, get evaluated and weighted by the matching criteria of step 9 the cost function calculation and by the value 8. Depending on the motion estimation technique a least number of motion vectors is needed to perform said motion estimation, whereby said motion vectors are to be considered as the most reliable ones. Advantageously, the motion estimation might also comprise additional techniques than the affine model transformation like e.g. the projective transformation or the polynomial transformation which are alternatively used dependent on the global motion. Moreover, the cost function calculation in step 9 might also comprise alternative calculation methods than the SAD.

In another embodiment of the present invention only value 8 is used as a matching criterion for the motion estimation, whereby said method only comprises the LBC step and the motion estimation step 10. Again there are embodiments of the present invention using one or more matching criteria.

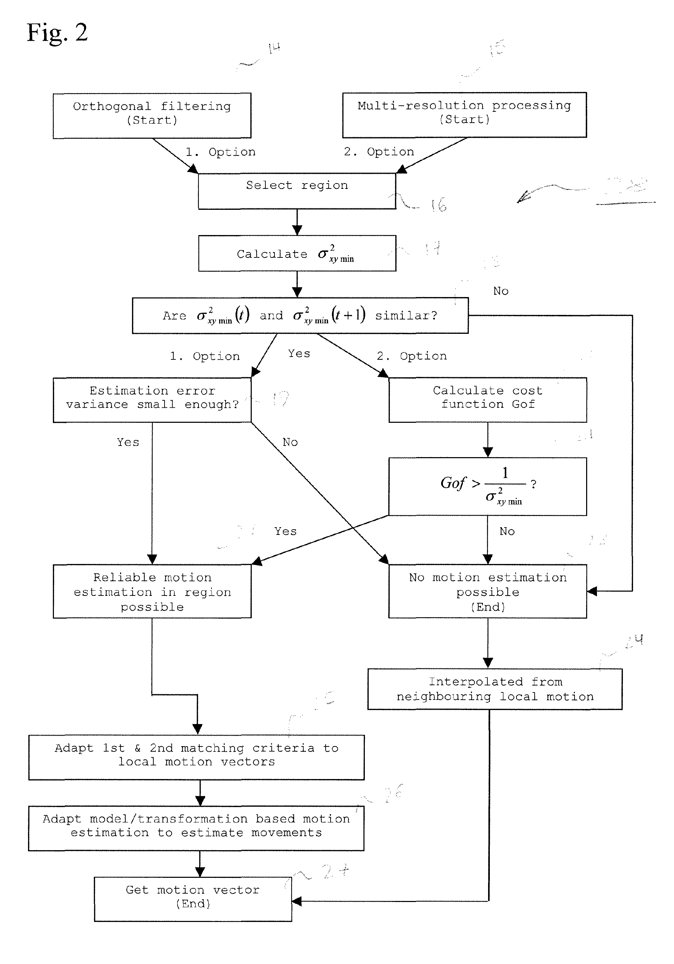

In another embodiment the $\sigma_{xy}^2{}_{min}$ value 8 does not need to be calculated, since it was already calculated for the pretesting as described below in step 17 of fig. 2, said pretesting step 18 stating if motion estimation of a specific region is still possible.

In fig. 2 a block diagram is shown which illustrates the process 28 of how to calculate a global motion vector for the motion estimation. The process 28 comprises the steps 14 to 27. The process 28 starts either with step 14 or step 15 as a preprocessing technique. Step 14 comprises orthogonal filtering. Step 15 comprises multi resolution processing which is operable to increase the searching range for the local motion vectors and to reduce the signal noise. After step 14 or 15, step 16 follows. In step 16 the process selects a region according to the motion estimation technique or to the global motion like transition or rotation to be tested or to be expected; in case of a rotating global motion e.g. a circular region is favorably selected. After step 16, step 17 follows. In step 17, the lower-bound value of the estimation error variance of the horizontal and vertical estimation of said region is calculated. After step 17, step 18 follows. In step 18 the process compares the lower-bound value of the current image and of the succeeding image. If the two values are similar, then the process goes either to step 19 or to step 20. If the two values are not similar, then the process goes directly to step 23, where it is stated that no motion estimation is possible. Since no motion estimation is possible an interpolation from neighbouring local motion vectors for the currently considered local motion vectors of said region is performed in step 24. These interpolated motion vectors can be used as the final motion vectors although no global motion was detected. In step 19 it is compared if the estimation error variance is small enough versus a predetermined value, said value being higher than $\sigma_{xy}^2{}_{min}$. If the value is small enough the process goes to step 22 where it is stated that reliable motion estimation in the region is possible. If the value is not small enough, then the process goes to step 23 where it is stated that no motion estimation is possible. In step 20, a cost function or goodness-of-fit (Gof) is calculated. After step 20, step 21 follows. In step 20 the cost function is compared to a factor based on the lower-bound value 8. If the cost function is bigger than the reciprocal value of the lower-bound value 8 then the process goes to step 22 where it is stated that reliable motion estimation is possible in that region. If the comparison is not true, then the process goes to step 23. After step 22, step 25 follows. In step 25 the local motion vectors are adapted with the first and second matching criteria, which means that the local motion vectors are evaluated by said criteria. As described in fig. 1 only one matching criterion can be applied, preferably said $\sigma_{xy}^2{}_{min}$ value 8. After step 25, step 26 follows. In step 26 the model transformation based motion estimation is adapted to estimate movements. Therefore, a least number of motion vectors are required and selected, depending on the motion estimation technique. The least number of local motion vectors is chosen by the most reliable motion vectors according to the matching criteria. After the motion estimation in step 26, step 27 follows and discloses the final global motion vectors as a result of the motion estimation or as a result from step 24, wherein the average vector of the local motion vectors is calculated from said region. It is also possible, that no global motion vector is selected, since no motion estimation is possible according to step 23 and 24.

Not shown in fig. 2 is the additional calculation after step 27, wherein the number of regions of the current image is compared to the number of regions of the succeeding image which corresponds or is similar to the regions of the current image. If no global motion vector was found in step 27 or the $\sigma_{xy}^2{}_{min}$ values in step 18 are not similar, then the region of the current image or a similar one is not available in the succeeding image due to scene change. Thus the number of matched regions between two images describes the scene change. A high number of matched regions in an indication for low scene change, while a low number of matched regions or no matched region was found at all indicates a high or complete scene change between the two images, respectively.

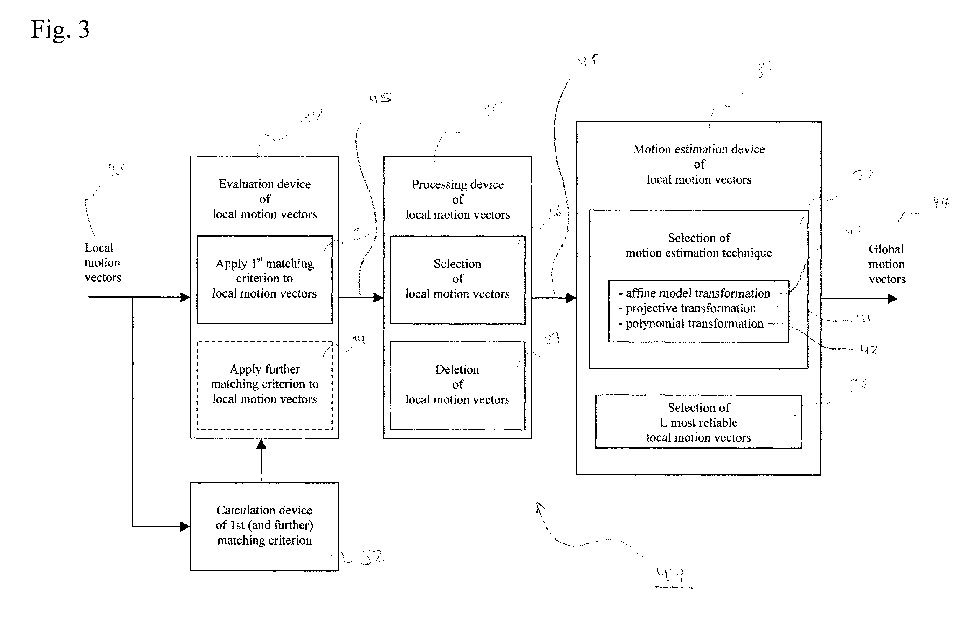

Fig. 3 shows an embodiment of the image processing device 47 of the present invention comprising an evaluation device 29, a processing device 30 and a motion estimation device 31. In another embodiment the image processing device 47 could additionally comprise a calculation device 32. The image processing device is operable to receive data which comprises local motion vectors 43, process said data by said evaluation device 29, said processing device 30 and said motion estimation device 31, subsequently, and output global motion vectors 44 obtained from said local motion vectors 43. The data could comprise other information which are either redundant for the calculation of the global motion vectors or which are essential to represent said local motion vectors. If there is data where local motion vectors 43 can be extracted from, then the image processing device additionally comprises an extraction device for extracting or computing said local motion vectors 43. Said extraction device is not shown in the figure 3 for the sake of clarity. In case no calculation device 32 is part of the present invention, then the data also comprises at least one matching criterion used in the evaluation device 29.

The evaluation device 29 is operable to receive and evaluate said local motion vectors 43 and eventually output the evaluated local motion vectors 45. The evaluation device 29 comprises one operation 33 wherein one matching criterion is applied to said local motion vectors 43. In other embodiments the evaluation device 29 comprises at least one more operation 34 wherein further matching criteria are applied to said local motion vectors 43. In case of a plurality of matching criteria said matching criteria are either simultaneously or subsequently applied to said local motion vectors 43.

The processing device 30 is operable to receive and process the evaluated local motion vectors 45, and eventually output the processed local motion vectors 46. The processing device 30 comprises a selection process 36 and/or a deletion process 37, wherein the evaluated local motion vectors 46 are either selected or deleted, respectively, according to their reliability for the motion estimation.

The motion estimation device 31 is operable to receive the processed local motion vectors 46, execute a motion estimation based on the input of the processed local motion vectors 46 and eventually output global motion vectors 44. The motion estimation device 31 comprises a selection unit 39 for selecting a motion estimation technique like e.g. affine model transformation 40, projective transformation 41 or polynomial transformation 42. Then based on the selected motion estimation technique the least number L of most reliable local motion vectors is determined. This number L is used in a vector selection unit 38 which selects the L most reliable local motion vectors from said processed local motion vectors 46 for the motion estimation.

The calculation device 32 is operable to receive the local motion vectors 32, calculate and output at least one matching criterion based on said local motion vectors 32.

The image processing device is also operable to describe a degree of scene change based on the number of regions successfully allocated to said global motion vectors as described in fig. 2 after step 27.

## Claims

1. An image processing method for obtaining at least one global motion vector (44) from local motion vectors (43), said local motion vectors (43) describing the motion of pixels of a region within two different images, said at least one global motion vector (44) describing the motion of said region within said two images, said image processing method comprising steps of

   • evaluating said local motion vectors (43) based on at least one matching criterion, wherein one matching criterion is based on a result of a statistical estimation function regarding said local motion vectors (43), and whereby said step of evaluating concludes the reliability of said local motion vectors (43) for motion estimation;
   • processing said local motion vectors (43),
   whereby said step of processing comprises steps of selecting and/or deleting said local motion vectors (43) according to their reliability; and
   • performing said motion estimation technique with a least number of most reliable local motion vectors (43) obtained by said processing step,
   whereby said number is dependent on said motion estimation technique.

2. An image processing method according to claim 1,
   wherein said result of the statistical estimation function is based on a result of the Cramer-Rao-Inequation.

3. An image processing method according to claim 2,
   wherein said one matching criterion is inversely proportional to said result of the Cramer-Rao-Inequation.

4. An image processing method according to one of the above mentioned claims,
   wherein said step of evaluating processes a second matching criterion which is based on a cost function calculation like gradient, energy, standard deviation or summed absolute difference.

5. An image processing method according to one of the above mentioned claims,
   wherein said step of evaluating processes at least two matching criteria, said matching criteria are simultaneously applied to evaluate said local motion vectors (43).

**6.** An image processing method according to one of the above mentioned claims, said image processing method comprising steps of calculating at least one of said at least one matching criterion.

**7.** An image processing method according to one of the above mentioned claims, said image processing method being conducted when a previously executed comparing step (19 or 21) states that reliable motion estimation for said region is possible.

**8.** An image processing method according to claim 7 and 2, wherein said comparing step (19) evaluates whether the result of the Cramer-Rao-Inequation is in a specific range, said range starting and located above a predetermined value.

**9.** An image processing method according to claim 7 and 2, wherein said comparing step (21) evaluates whether an inversely proportional result of the Cramer-Rao-Inequation is smaller than a result of the cost function calculation.

**10.** An image processing method according to claim 8 or 9, wherein said comparing step (19 or 21) is conducted when a controlling step (18) affirms the similarity of the result of the Cramer-Rao-Inequation of said region of the current image and the result of the Cramer-Rao-Inequation of said region of the succeeding image.

**11.** An image processing method according to claim 10, wherein said result of the Cramer-Rao-Inequation (17) is calculated before executing the controlling step.

**12.** An image processing method according to claim 11, wherein said image processing method comprises a multi-resolution processing step (15) to reduce the variance of the estimation error.

**13.** An image processing method according to claim 11, wherein said image processing method comprises an orthogonal filtering step (14).

**14.** An image processing method according to one of the above mentioned claims, wherein said image processing method describes the degree of scene change between two images based on the number of regions successfully allocated with said global motion vectors (44).

**15.** An image processing device (47) operable to obtain at least one global motion vector (44) from local motion vectors (43), said local motion vectors (43) describing the motion of pixels of a region within two different images, said at least one global motion vector (44) describing the motion of said region within said two images, said image processing device comprising

• an evaluation device (29) operable to evaluate said local motion vectors (43) based on at least one matching criterion, wherein one matching criterion is based on a result of a statistical estimation function regarding said local motion vectors (43), and to conclude the reliability of said local motion vectors (43) for motion estimation;
• a processing device (30) operable to process said local motion vectors (43), whereby said processing device (30) comprises a selection (36) and/or a deletion (37) device operable to respectively select or delete said local motion vectors (43) according to their reliability; and
• a motion estimation device (31) operable to perform motion estimation with a least number of most reliable local motion vectors (43) obtained by said processing device (30), whereby said number is dependent on said motion estimation.

**16.** An image processing device according to claim 15, wherein said result of the statistical estimation function is based on a result of the Cramer-Rao-Inequation.

**17.** An image processing device according to claim 16, wherein said one matching criterion is inversely proportional to said result of the Cramer-Rao-Inequation.

**18.** An image processing device according to one of the claims 15 to 17, wherein said evaluation device (29) is operable to evaluate said local motion vectors (43) based on a second matching criterion, said second matching criterion being based on a cost function calculation like gradient, energy, standard deviation or summed absolute difference.

19. An image processing device according to one of the claims 15 to 18,
    wherein said evaluation device (29) is operable to evaluate said local motion vectors (43) based on at least two matching criteria, said matching criteria are simultaneously applied to said local motion vectors (43).

20. An image processing device according to one of the claims 15 to 19,
    wherein said motion estimation device (47) is operable to select affine model transformation (40), projective transformation (41) or polynomial transformation (42) for motion estimation.

21. An image processing device according to one of the claims 15 to 20,
    said image processing device comprising a calculation device (32),
    said calculation device (32) being operable to receive said local motion vectors (43), to calculate said at least one matching criterion and output said at least one matching criterion to said evaluation device (29).

22. An image processing device according to one of the claims 15 to 21,
    wherein said image processing device describes a degree of scene change based on the number of regions successfully allocated to said global motion vectors (44).

# Fig. 1

# Fig. 2

```
┌─────────────────────┐              ┌──────────────────────────┐
│ Orthogonal filtering│              │ Multi-resolution processing│
│      (Start)        │              │         (Start)          │
└─────────────────────┘              └──────────────────────────┘
        1. Option                       2. Option
              ↘                       ↙
            ┌─────────────────────────┐
            │     Select region       │
            └─────────────────────────┘
                        ↓
            ┌─────────────────────────┐
            │  Calculate $\sigma^2_{xy\,min}$  │
            └─────────────────────────┘
                        ↓
   ┌──────────────────────────────────────────────┐     No
   │ Are $\sigma^2_{xy\,min}(t)$ and $\sigma^2_{xy\,min}(t+1)$ similar? │────→
   └──────────────────────────────────────────────┘
     1. Option        Yes        2. Option
```

Estimation error variance small enough?

Calculate cost function Gof

$$Gof > \dfrac{1}{\sigma^2_{xy\,min}} \ ?$$

Yes

No

Yes

No

Reliable motion estimation in region possible

No motion estimation possible (End)

Interpolated from neighbouring local motion

Adapt 1st & 2nd matching criteria to local motion vectors

Adapt model/transformation based motion estimation to estimate movements

Get motion vector (End)

13

# Fig. 3

Local
motion
vectors

**Evaluation device
of
local motion vectors**

Apply 1ˢᵗ matching
criterion to
local motion vectors

Apply further
matching criterion to
local motion vectors

**Processing device
of
local motion vectors**

Selection
of
local motion vectors

Deletion
of
local motion vectors

**Motion estimation device
of
local motion vectors**

Selection of
motion estimation technique

- affine model transformation
- projective transformation
- polynomial transformation

Selection of
L most reliable
local motion vectors

Global
motion
vectors

Calculation device
of 1st (and further)
matching criterion

EP 1 924 098 A1

EP 1 924 098 A1

**European Patent Office**

## EUROPEAN SEARCH REPORT

Application Number

EP 06 12 4068

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/37859 A (COMPRESSION SCIENCE [US]; HAMILTON ERIC [US]; DOUGLAS JOHN [US]; LELES) 10 May 2002 (2002-05-10) <br> * abstract * <br> * page 29, line 25 - page 30, line 7 * <br> * page 90, line 1 - page 91, line 17 * <br> * figure 6f * <br> ----- | 1,15 | INV. H04N7/26 |
| X | US 5 748 231 A (PARK YONG-CHUL [KR] ET AL) 5 May 1998 (1998-05-05) <br> * abstract * <br> * columns 10,17,28 * <br> * figure 6 * <br> * claim 1 * <br> ----- | 1,15 | |
| | | | TECHNICAL FIELDS SEARCHED (IPC) <br><br> H04N |

The present search report has been drawn up for all claims

| Place of search | Date of completion of the search | Examiner |
|---|---|---|
| Munich | 26 April 2007 | Lindgren, Johan |

EPO FORM 1503 03.82 (P04C01)

## ANNEX TO THE EUROPEAN SEARCH REPORT
## ON EUROPEAN PATENT APPLICATION NO.

EP 06 12 4068

This annex lists the patent family members relating to the patent documents cited in the above-mentioned European search report.
The members are as contained in the European Patent Office EDP file on
The European Patent Office is in no way liable for these particulars which are merely given for the purpose of information.

26-04-2007

| Patent document cited in search report | | Publication date | Patent family member(s) | | Publication date |
|---|---|---|---|---|---|
| WO 0237859 | A | 10-05-2002 | AU | 2888402 A | 15-05-2002 |
| US 5748231 | A | 05-05-1998 | NONE | | |

EPO FORM P0459

For more details about this annex : see Official Journal of the European Patent Office, No. 12/82